# EUROPÄISCHE PATENTSCHRIFT

(11) **EP 1 208 050 B1**
(45) Veröffentlichungstag und Bekanntmachung des Hinweises auf die Patenterteilung: **23.07.2003**
(21) Anmeldenummer: 00949470.9
(22) Anmeldetag: 08.08.2000
(51) Int. Cl.: B65D 88/12, B65G 67/24, B65D 88/30, B65D 88/32

(54) **VERLADESILOANLAGE**
SILO TRANSSHIPPING PLANT
SYSTEME DE SILO DE TRANSBORDEMENT

(30) Priorität: 13.08.1999 DE 19938351
(43) Veröffentlichungstag der Anmeldung: 29.05.2002
(73) Patentinhaber: LINTEC GmbH & Co. KG, 21614 Buxtehude (DE)
(72) Erfinder: THESENFITZ, Klaus, D-21647 Moisburg (DE)
(74) Vertreter: Glaeser, Joachim, Dipl.-Ing.
(86) Internationale Anmeldenummer: EP0007668
(87) Internationale Veröffentlichungsnummer: WO01012529

(56) Entgegenhaltungen:
- FR-A- 2 380 915
- FR-A- 2 701 013
- US-A- 4 482 281

## Beschreibung

Die Erfindung bezieht sich auf eine modular aufgebaute und für den Transport zerlegbare Verladesiloanlage für die Aufnahme, die Lagerung und die Abgabe von heißem Asphalt-Mischgut in Fahrzeuge, aufweisend eine schräg ausgerichtete Kübelbahn, an deren unterem Ende ein Kübel heißen Asphalt aufnimmt, aufwärts transportiert und am oberen Ende der Kübelbahn in einen Aufnahmebehälter abgibt, und aufweisend eine Abgabeeinrichtung im unteren Bereich des Aufnahmebehälters für die Übergabe heißen Asphalts an Fahrzeuge. Eine derartige Anlage ist bekannt (US 4 482 281).

Beim Bau von Verladesiloanlagen ist es bekannt, Gehäuse, Silos u.ä. aus mehreren Einzelelemente auch lösbar zusammenzusetzen, wobei die Einzelelemente, insbesondere die Wandungen, bestimmte äußere Abmessungen aufweisen (JP 10 250 790 A, DE 33 37 218 A1, DE-OS 26 22 391, DE 31 46 463 A1, DE-Prospekt RHK Ketten-Becherwerk, Bühler, 1989).

Darüber hinaus ist es auch bekannt (EP 0 963 920 A2, DE 23 06 855 A1), Aufnahmebehälter modular aufzubauen und die Teile mit Schnellbefestigungsmitteln zu verbinden.

Verladesiloanlagen sind recht kompliziert aufgebaute Anlagen, die vor Ort aus den Einzelteilen zusammengesetzt werden. Häufig wird dabei zunächst einmal der Aufnahmebehälter für das Asphalt-Mischgut auf Stelzen aufgebaut und später dann die Kübelbahn oder eine andere Fördereinrichtung zusammengesetzt. Dies bedeutet, dass die Anlage selbst vor Ort mit einem relativ hohen Montageaufwand erstellt wird, und dies ist in der heutigen Zeit allein schon deshalb nicht mehr erwünscht, weil derartige Anlagen nicht permanent an einem bestimmten Ort verbleiben sollen.

Der Erfindung liegt die Aufgabe zu Grunde, eine Verladesiloanlage so auszugestalten, dass sie abhängig von den Baustellen innerhalb kürzester Zeit montiert und demontiert werden kann.

Erreicht wird dies bei einer Verladesiloanlage der eingangs genannten Art dadurch, dass das Gehäuse des Aufnahmebehälters aus mehreren Einzelelementen zusammengesetzt ist und das Gehäuse der Kübelbahn ebenfalls aus Einzelelementen zusammengesetzt ist, wobei die Einzelelemente die äußeren Abmessungen üblicher Transportcontainer haben, vorzugsweise von 20" oder 40" Iso standard Containern und die Einzelelemente an ihren Eckpunkten mit den bei Containern üblichen Eckbeschlägen versehen sind, wobei die Eckbeschläge sowohl zur Montage der Einzelelemente als auch zur Sicherung beim Transport dienen.

Im Prinzip wird die gesamte Anlage in Einzelelemente zerlegt, wobei die Einzelelemente so dimensioniert werden, dass sie die Außenabmessungen von handelsüblichen Containern haben. Insbesondere die Eckbeschläge befinden sich an den entsprechenden Stellen, so dass eine Verladung dieser Einzelelemente mittels Container-Frachtfahrzeugen ohne weiteres möglich ist.

Der Vorteil dieses Prinzips ergibt sich daraus, dass eine Anlage innerhalb kürzester Zeit an einer bestimmten Stelle errichtet werden kann, wobei eine Vielzahl von Container-Einzelelementen herangeschafft wird. Diese werden dann mit den üblichen Befestigungsmitteln miteinander verbunden, so dass die Montagearbeit im wesentlichen darin besteht, Einzelelemente zusammenzusetzen.

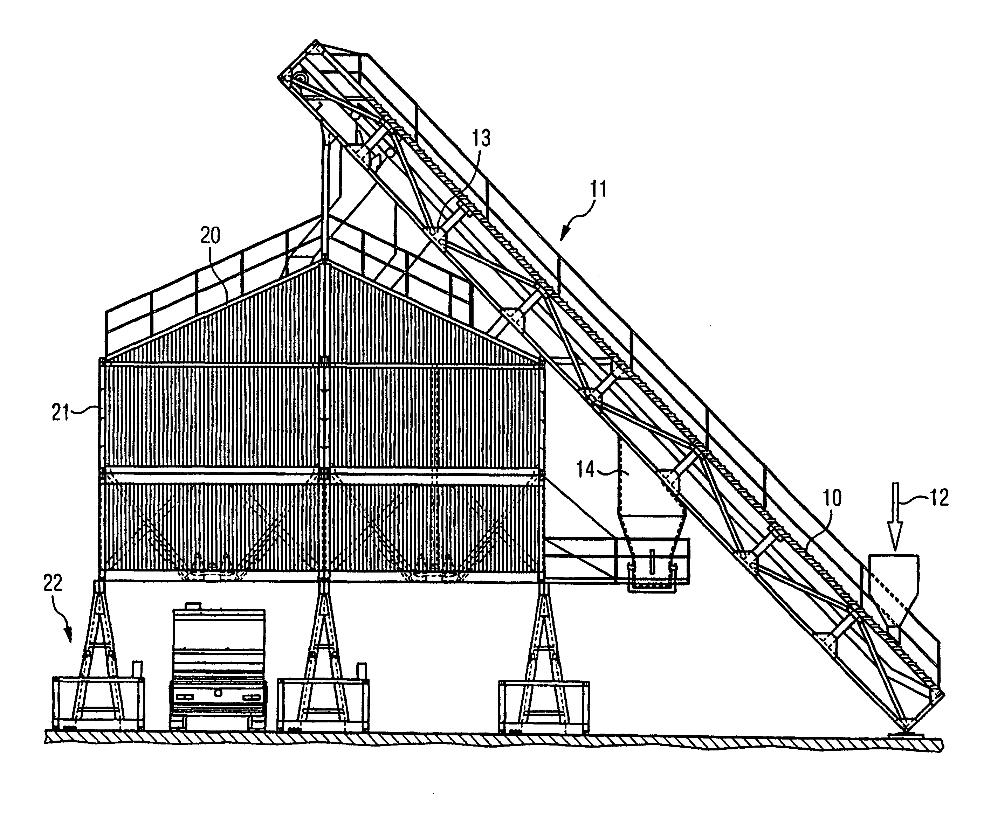

Die Erfindung wird nachstehend anhand der Zeichnung beispielsweise erläutert.

Die einzige Figur der Zeichnung zeigt eine schaubildliche Ansicht auf eine Verladesilosnlage gemäß der Erfindung.

In der Figur ist der Aufnahmebehälter für heißen Asphalt im linken Teil zu erkennen, ebenso wie die Stelzen 22, auf denen dieser Behälter aufruht. Ein Kraftfahrzeug ist in der Beladestation zu sehen. Der Aufnahmebehälter selbst wird über eine Kübelbahn mittels eines Kübels 12 beladen, welcher auf der schräg verlaufenden Kübelbahn von rechts unten nach links oben transportiert werden kann. Die Kübelbahn besteht aus zwei Einzelelementen 10 und 11, die miteinander befestigt worden sind, nachdem sie als Einheit für sich zum Erstellungsort transportiert worden sind. Die Elemente 10 und 11 haben die Außenabmessungen eines 40" Iso-Containers, sie sind nach oben hin verkleidet. Nach Montage in der richtigen Lage werden die Geländer eingesteckt.

Der Kübel 12 befindet sich in der Beladestation. Bei 14 ist diejenige Stelle des Kübels 12 erreicht, wo sein Inhalt in ein Fehlmischsilo gegeben werden kann oder wo ein Fahrzeug von oben her direkt beladen werden kann. Mit 13 ist die obere Position des Kübels 12 bezeichnet, wobei in dieser Position heiße Asphaltmasse in den Aufnahmebehälter abgegeben wird.

Mit 21 sind Elemente des Aufnahebehälters bezeichnet, und zwar handelt es sich hierbei um 20" Iso- Container, die mit Trapezblech verkleidet sind. Die Behälterelemente 21 werden in der üblichen Art und Weise zusammengesetzt, sie ruhen auf Stelzen 22. Nach oben hin werden sie durch halbe 20" Iso-Container abgeschlossen, die nach dem Transport miteinander befestigt werden.

## Patentansprüche

1. Modular aufgebaute und für den Transport zerlegbare Verladesiloanlage für die Aufnahme, die Lagerung und die Abgabe von heißem Asphalt-Mischgut in Fahrzeuge, aufweisend eine schräg ausgerichtete Kübelbahn, an deren unterem Ende ein Kübel heißen Asphalt aufnimmt, aufwärts transportiert und am oberen Ende der Kübelbahn in einen Aufnahmebehälter abgibt, und aufweisend eine Abgabeeinrichtung im unteren Bereich des Aufnahmebehälters für die Übergabe heißen Asphalts an Fahrzeuge, **dadurch gekennzeichnet, dass** das Gehäuse des Aufnahmebehälters aus mehreren Einzelelementen (20, 21) zusammengesetzt ist und das Gehäuse der Kübelbahn ebenfalls aus Einzelelementen (10, 11) zusammengesetzt ist, wobei die Einzelelemente (10, 11, 20, 21) die äußeren Abmessungen üblicher Transportcontainer haben, vorzugsweise von 20" oder 40" Iso standard Containern und die Einzelelemente (10, 11, 20, 21) an ihren Eckpunkten mit den bei Containern üblichen Eckbeschlägen versehen sind, wobei die Eckbeschläge sowohl zur Montage der Einzelelemente (10, 11, 20, 21) als auch zur Sicherung beim Transport dienen.

## Claims

1. Modular constructed loading silo plant dismountable for transport for the reception, the storage and the discharge into vehicles of hot asphalt material to be mixed, comprising an obliquely oriented skip conveyor, at the lower end of which a skip receives hot asphalt, conveys it upwards and discharges it at the top end of the skip conveyor into a receptacle, and further comprising a discharge device in the lower area of the receptacle for the transfer of hot asphalt to vehicles, **characterised in that** the housing of the receptacle is assembled from several individual elements (20, 21) and the housing of the skip conveyor is also assembled from individual elements (10, 11), said individual elements (10, 11, 20, 21) having outer dimensions of ordinary transport containers, preferably of 20" or 40" ISO standard containers, and that the individual elements (10, 11, 20, 21) are provided at their corner points with corner fittings usually provided at containers, said corner fitting serving both for the assembly of the individual elements (10, 11, 20, 21) as well as the securing during transport.

## Revendications

1. Une installation de silo de chargement, réalisée sous forme modulaire et démontable à des fins de transport, pour le recueil, le stockage et le déversement de mélange bitumineux chaud dans des véhicules, comportant une glissière inclinée, à l'extrémité inférieure de laquelle une benne recueille l'asphalte chaud, le transporte vers le haut et le déverse dans un bac récepteur, à l'extrémité supérieure de la glissière, et comprenant une installation de déversement dans la zone inférieure du bac récepteur pour le transfert d'asphalte chaud dans des véhicules, **caractérisée en ce que** la caisse du bac récepteur est composée de plusieurs éléments individuels (20, 21) et que la caisse de la glissière est également composée d'éléments individuels (10, 11), les éléments individuels (10, 11, 20, 31) ayant les dimensions externes des conteneurs de transport classiques, de préférence de conteneurs Iso standard de 50,80 cm ou 101,60 cm, et les éléments individuels (10, 11, 20, 21) étant munis, au niveau de leurs angles, de ferrures d'angle classiques pour conteneurs, les ferrures d'angle servant à la fois au montage des éléments individuels (10, 11, 20, 21) et au blocage lors du transport.
